# EUROPÄISCHE PATENTSCHRIFT

(11) **EP 0 615 771 B1**
(45) Veröffentlichungstag und Bekanntmachung des Hinweises auf die Patenterteilung: **17.11.1999**
(21) Anmeldenummer: 94101685.9
(22) Anmeldetag: 04.02.1994
(51) Int. Cl.: A62C 39/00, A62C 35/02

(54) **Vorrichtung zum Betreiben einer Feuerlöscheinrichtung**
Apparatus for operating a fire extinguishing system
Dispositif de fonctionnement d'un système d'extinction d'incendies

(30) Priorität: 12.02.1993 DE 4304257
(43) Veröffentlichungstag der Anmeldung: 21.09.1994
(73) Patentinhaber: TOTAL WALTHER GmbH, Feuerschutz und Sicherheit, 51069 Köln (DE)
(72) Erfinder: Klingberg, Peter, D-51107 Köln (DE); Kötter, Karl, D-51503 Rösrath (DE); Schaefers, Herbert, D-51491 Overath (DE); Schmidt, Werner, D-50374 Erftstadt (DE)
(74) Vertreter: Selting, Günther, Dipl.-Ing.

(56) Entgegenhaltungen:
- EP-A- 0 010 465
- EP-A- 0 409 237
- FR-A- 1 330 001
- FR-A- 2 646 783

## Beschreibung

Die Erfindung betrifft eine Vorrichtung zum Betreiben einer Feuerlöscheinrichtung mit einem gasförmigen Löschmittel, das in mehreren Gasflaschen oder dergleichen gelagert ist, wobei den Gasflaschen eine mit einem Gas gefüllte Steuerflasche mit einem mit einer Auslöseeinrichtung versehenen Steuerventil vorgeschaltet und an dem eine Steuerleitung angeschlossen ist, die über Zweigleitungen mit den Flaschenventilen der nachfolgenden Gasflaschen verbunden sind, und daß von den Flaschenventilen jeweils eine Abführleitung abgeht, wobei das Steuerventil und die Flaschenventile jeweils mit einer Auslöseeinrichtung versehen sind.

Derartige Feuerlöscheinrichtungen arbeiten mit einer flüssigen Kohlensäure als Löschmittel, die in Hochdruck-Stahlflaschen gelagert und zu Batterien zusammengefaßt sind. Alle Stahlflaschen sind mit einem Flaschenventil versehen, die an eine gemeinsame Steuerleitung angeschlossen sind. Die erste Flasche einer Flaschengruppe ist eine Steuer- und/oder Pilotflasche, deren Flaschenventil mit einer elektrisch gesteuerten Stoßfeder oder dergleichen bestückt ist. Ausgehend von einer Brandmeldezentrale wird die Stoßfeder zunächst elektrisch angesteuert und öffnet damit das Flaschenventil der Steuer- oder Pilotflasche. Der Inhalt dieser Flasche strömt über die Steuerleitung zu den übrigen Flaschenventilen, die dadurch geöffnet werden.

Auch andere geeignete Gase werden für derartige Feuerlöscheinrichtungen eingesetzt, wie z.B. Halon, Argon, INERGEN.

Es ist eine Feuerlöscheinrichtung bekannt (FR-A 1 330 001), bei der die Steuerflasche mit einem Druckgas und die nachfolgenden über eine Steuerleitung verbundenen Gasflaschen mit einem Löschmittel gefüllt sind. Die Flaschenventile bestehen jeweils aus einem auf die Gasflaschen aufgeschraubten Ventilkörper mit einer membrangesteuerten Klappe. Das Steuerventil der Steuerflasche wird manuell, elektrisch oder pneumatisch gesteuert, und damit das Druckgas aus der Steuerflasche freigegeben. Das Steuergas öffnet die Ventile der mit Löschmittel gefüllten Gasflaschen, so daß das gasförmige Löschmittel seinem Bestimmungszweck zugeführt werden kann.

In den bekannten Ventilen der Gasflaschen wird eine federbelastete Membran vom Steuergas der Steuerflasche beaufschlagt und damit die Verschlußklappe geöffnet. Mit diesen Ventilen ist eine restlose Entleerung der Löschmittelbehälter nicht möglich.

Bei einer weiteren bekannten Feuerlöscheinrichtung (EP 0409237 A1) wird eine elektrisch-pneumatische Verzögerungseinrichtung für mehrere Bereichsventile eingesetzt. Hier ist eine zweifache Verzögerung erforderlich, um elektrische Fehlauslösungen zu vermeiden.

Es ist ein druckgesteuertes Ventil bekannt (EP 0010465 A2), das gegen den Druck des Löschmittels mittels eines Druckgases geschlossen gehalten wird. Geöffnet wird dieses Ventil durch Abschalten des Druckgases. Dies hat den Nachteil, daß sich das Ventil, beispielsweise bei einer Undichtigkeit, ungewollt öffnet.

Behördliche Vorschriften besagen, daß Feuerlöscheinrichtungen mit einem gasförmigen Löschmittel in Räumen, Hallen oder dergleichen erst dann geöffnet werden dürfen, wenn Personen gewarnt und zum Verlassen der Räume aufgefordert sind. Zu diesem Zweck sind die Flaschenventile der Steuer- und/oder Pilotflaschen mit einer Verzögerungseinrichtung versehen, die erst nach Ablauf einer voreingestellten Zeit die Steuer- oder Pilotflasche öffnen.

Die älteren Steuerventile sind mit zusätzlichen pneumatischen und elektrisch gesteuerten Einrichtungen versehen, die separate Bauteile erfordern, so daß auch das Flaschenventil mit mehreren Einzelteilen ausgerüstet sein muß. Damit wird der Verschleiß und die Undichtheiten vergrößert und letztlich die Funktion der Feuerlöscheinrichtung beeinträchtigt.

Der Erfindung liegt die Aufgabe zugrunde eine Vorrichtung zu schaffen, mit der die Funktionsfähigkeit einer Feuerlöscheinrichtung mit einem gasförmigen Löschmittel verbessert und gleichzeitig der Sicherheitsstandard erhöht wird.

Diese Aufgabe wird mit den Merkmalen des Patentanspruchs 1 gelöst.

Mit dieser Maßnahme werden die Flaschenventile über die Steuerleitungen direkt angesteuert, so daß bei erhöhter Betriebssicherheit eine gleichmäßige Aufsteuerung der Flaschenventile gewährleistet ist. Außerdem wird die Funktionsfähigkeit und die Wartung der Vorrichtung verbessert. Damit steht nicht nur eine nahezu wartungsfreie Vorrichtung zur Verfügung, vielmehr wird die Wartung vereinfacht, sollte sie einmal nötig sein.

Die Ausbildung des Kolbenventils mit einer Kappe hat den weiteren Vorteil, daß ohne bauliche Änderungen des Kolbenventils die Kappe für das Steuerventil als Auslösevorrichtung ausgebildet und an den Anschlußstutzen eine Auslöseeinrichtung angeschlossen sein kann und daß die Anschlußstutzen der Kappen für die Flaschenventile mit den Zweigleitungen verbunden sind.

Ist die Steuerflasche als Pilotflasche mit Löschgas gefüllt und in die Steuerleitung ein Drosselorgan mit Rückschlagventil eingebaut, so kann eine an dem Drosselorgan angeschlossene Leitung mit der Sammelleitung verbunden werden. Ist das Drosselorgan zwischen dem Steuerventil und dem ersten Flaschenventil eingebaut, kann der Inhalt der Pilotflasche für den Löschvorgang benutzt werden. Ausgehend von der Pilotflasche wird deren Inhalt in zwei Ströme aufgeteilt, von denen einer zum Löschen und der andere zum Aufsteuern der Folgeflaschen verwendet wird. Das Drosselorgan sorgt für eine gleichmäßige Beaufschlagung der Steuerleitung und die Flaschenventile verhindern einen Rückstrom in die Flaschen. Das Drosselorgan kann auch hinter dem letzten Flaschenventil in einer Steuerleitung eingebaut sein. Bei dieser Anordnung ist dann eine Leitung vom Drosselorgan zur Sammelleitung geführt. Mit dieser Maßnahme wird erreicht, daß das Gas aus der Pilotflasche zunächst nur zum Steuern und dann erst zum Löschen verwendet wird.

Das Drosselorgan kann auch als Doppel-Rückschlagventil ausgebildet sein. Dieses sorgt dann dafür, daß das Gas aus der Pilotflasche so lange voll zur Beaufschlagung der Steuerleitung zur Verfügung steht, bis sich ein Druckaufbau in der Sammelleitung eingestellt hat. Erst dann öffnet das Doppelrückschlagventil und gibt das Gas aus der Pilotflasche zum Löschen frei. Ein weiterer Erfindungsgedanke ist darin zu sehen, daß die Steuerflasche als Pilotflasche mit Löschgas gefüllt ist und daß von dem Steuerventil eine Abführleitung zu der Sammelleitung und von der Sammelleitung jeweils eine Steuerleitung zu den Flaschenventilen geführt ist. Die Sammelleitung ist mit mindestens zwei Drosseln versehen. Bei dieser Ausgestaltung fließt das Gas aus der Pilotflasche direkt in die Sammelleitung, in der sich dann ein Druck zum Öffnen der Flaschenventile der Folgeflaschen aufbaut. Die Drosselstellen in der Sammelleitung sichern den Druckaufbau in dieser Leitung und gewährleisten ohne Steuerleitungen ein einwandfreies Öffnen der Flaschenventile.

Fernerhin ist ein Kolbenventil zum Einbau in die erfindungsgemäße Vorrichtung vorgesehen, das von einem bekannten Kolbenventil (EP 0010465) ausgeht. Dieses besteht aus einem Ventilkörper mit Innenbohrung und einem Gewindestutzen zum Aufschrauben auf die Steuer- und Gasflaschen, sowie einem Anschlußstutzen für das Steuergas und einem Abfuhrstutzen für das Steuer- bzw. Löschgas, sowie einen in der Bohrung des Ventilkörpers bewegbaren Steuerkolben, der am unteren Ende eine Dichtung trägt, wobei der Ventilkörper mittels einer Kappe mit Anschlußstutzen verschließbar ist. Demgegenüber wird vorgeschlagen, daß die Kolbenstange am unteren Ende eine Ventilplatte trägt, die vom Steuer- bzw. Löschgas gegen einen Ventilsitz des Ventilkörpers preßbar ist, und daß die Kolbenstange im Bereich des Abfuhrstutzens einen verringerten Querschnitt aufweist.

Ausführungsbeispiele der Erfindung sind in der Zeichnung schematisch dargestellt und werden nachfolgend näher beschrieben. Es zeigt:
Fig. 1 eine Flaschengruppe mit entsprechenden Ventilleitungen und dergleichen,
Fig. 2 bis 4 weitere Ausführungsbeispiele,
Fig. 5 eine Flaschengruppe ohne Steuerleitungen,
Fig. 6 eine vergrößerte Darstellung des Flaschenventils,
Fig. 6a einen versetzten Stutzen mit Berstscheibe,

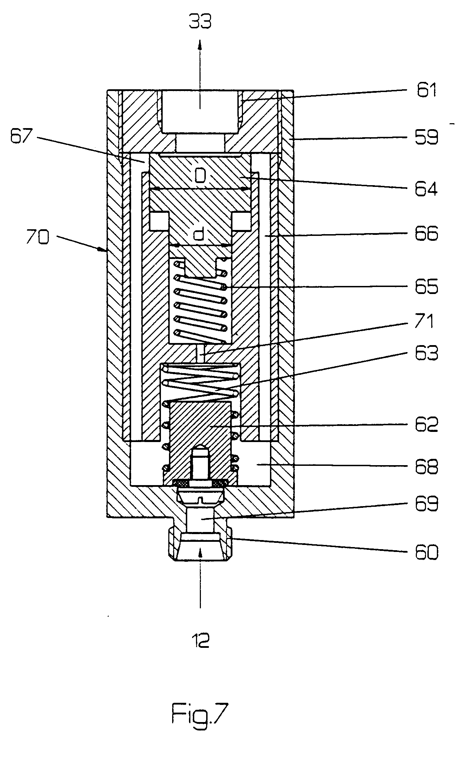

Fig. 7 eine vergrößerte Darstellung des Doppel-Rückschlagventils.

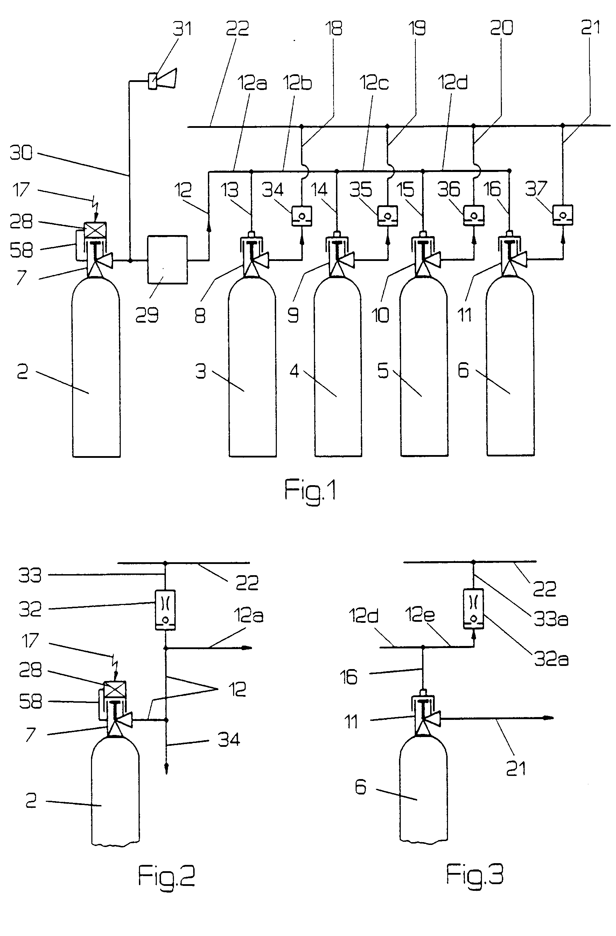

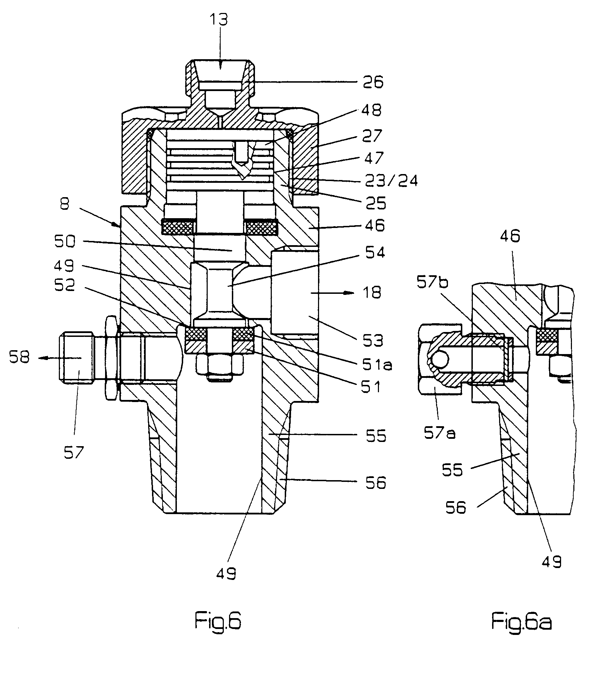

Die Feuerlöscheinrichtung 1 besteht aus einer Batterie mit den Hochdruckgasflaschen 2 bis 6, wobei im Ausführungsbeispiel nach Fig. 1 die Flasche 2 mit einem Steuergas und die Nachfolgeflaschen 3 bis 6 mit einem unter Hochdruck stehenden gasförmigen Löschmittel gefüllt sind. Die Flasche 2 ist mit einem Steuerventil 7 und die Folgeflaschen 3 bis 6 jeweils mit einem Flaschenventil 8 bis 11 versehen. Diese Flaschenventile bestehen aus einem direkt gesteuerten Kolbenventil, wie es in Fig. 6 dargestellt ist, die einen Ventilkörper 46 aufweisen, wobei die Flaschenventile 8 bis 11 mittels einer Kappe 27 im oberen Bereich abgeschlossen sind. Beim Steuerventil 7 ist anstelle der Kappe 27 eine an sich bekannte Auslösevorrichtung 28 mit einer an sich bekannten Auslöseeinrichtung 17 versehen. Zum Aufschrauben der Kappe 27 mit einem Anschlußstutzen 26 ist ein Stutzen 25 mit Außengewinde 23 auf den Ventilkörper 46 aufgesetzt, auf den die Kappe mit dem Innengewinde 24 aufgeschraubt ist. Der Stutzen 25 kann auch verlängert und mit einem Innengewinde versehen sein, in das die Kappe 27 mit einem Außengewinde eingeschraubt wird. In einer Innenbohrung 47 befindet sich ein Kolben 48 mit einer Kolbenstange 50, die am unteren Ende mit einer Ventilplatte 51 und einer Dichtung 51a versehen ist. Diese liegt an einem Dichtsitz 52 des Ventilkörpers 46 an und geht in eine Innenbohrung 49 über, die über den Stutzen 55 mit dem Außengewinde 56 der Gasflaschen 7 bis 11 verschraubt ist. Fernerhin ist im Ventilkörper 46 ein Stutzen 53 zum Anschluß der Steuerleitungen vorgesehen. Zur Verbesserung der Gasströmung, ist die Kolbenstange 50 im Bereich des Stutzens 53 mit einem verringerten Durchmesser 54 versehen. Unterhalb der Dichtplatte 51 ist ein Anschlußstutzen 57 für ein Druckmeßgerät und/oder ein Bypass 58 vorgesehen. Vom Abführstutzen 53 des Steuerventiles 7 geht eine Steuerleitung 12 ab, die in Steuerleitungen 12a bis 12d mündet. Von der Steuerleitung 12a geht eine Zweigleitung 13 zum Stutzen 26 der Kappe 27 des Flaschenventils 8. Ebenso gehen von den Steuerleitungen 12b bis 12d Zweigleitungen 14 bis 16 zu den Anschlußstutzen 26 der Flaschenventile 9 bis 11. Von den Abführstutzen 53 der Flaschenventile 8 bis 11 gehen Abführleitungen 18 bis 21 ab, die in eine Sammelleitung 22 münden. Innerhalb der Steuerleitung 12 ist eine Verzögerungseinrichtung 29 vorgesehen, vor der eine Leitung 30 mit einer Warneinrichtung 31 abgezweigt ist. Beim Öffnen des Steuerventils 7 wird die Warneinrichtung sofort in Tätigkeit gesetzt und die Verzögerungseinrichtung beginnt zu laufen. Nach Ablauf der eingestellten Verzögerungszeit strömt das Steuergas über die Leitungen 12 und 12a bis 12 d zu den Steuerventilen 8 bis 11 und öffnet diese, so daß das Löschmittel aus den Gasflaschen 3 bis 6 in die Sammelleitung 22 und von dort zur nicht dargestellten Löscheinrichtung strömen kann. Im Brandfalle wird beispielsweise von einer nicht dargestellten Brandmeldezentrale ein elektrischer Impuls auf die elektrische Auslöseeinrichtung 17 geschaltet, die wiederum die Auslösevorrichtung 28 öffnet. Damit strömt das Löschgas aus der Bohrung 49 über den Stutzen 57 und dem Bypass 58 Steuergas auf den Kolben 48 des Steuerventils 7, das damit geöffnet wird.

Der Vorteil des erfindungsgemäßen Kolbenventils ist darin zu sehen, daß ein Grundventil für mehrere Ventile genutzt werden kann, z.B. als Pilotflaschenventil, als Folgeflaschenventil oder dergleichen. So können anstelle der Kappe 27 Steuer- oder Anschlußköpfe verwendet werden.

Im Ausführungsbeispiel nach Fig. 2 ist in die Steuerleitung 12 ein Drosselorgan 32 mit Rückschlagsicherung eingebaut. Von dieser geht einmal die Steuerleitung 12 a zur Leitung 12 b bzw. zur Leitung 13 und zum anderen eine Leitung 33 zur Sammelleitung 22 ab. In diesem Ausführungsbeispiel ist die Gasflasche 2 als Pilotflasche mit einem Löschgas gefüllt, so daß dieses Gas mit zum Löschvorgang herangezogen werden kann. Das Drosselorgan 32 mit der Rückschlagsicherung ist so ausgerüstet, daß das Löschgas aus der Pilotflasche in zwei Ströme aufgeteilt wird, die einmal zum Steuern und zum anderen zum Löschen eingesetzt werden.

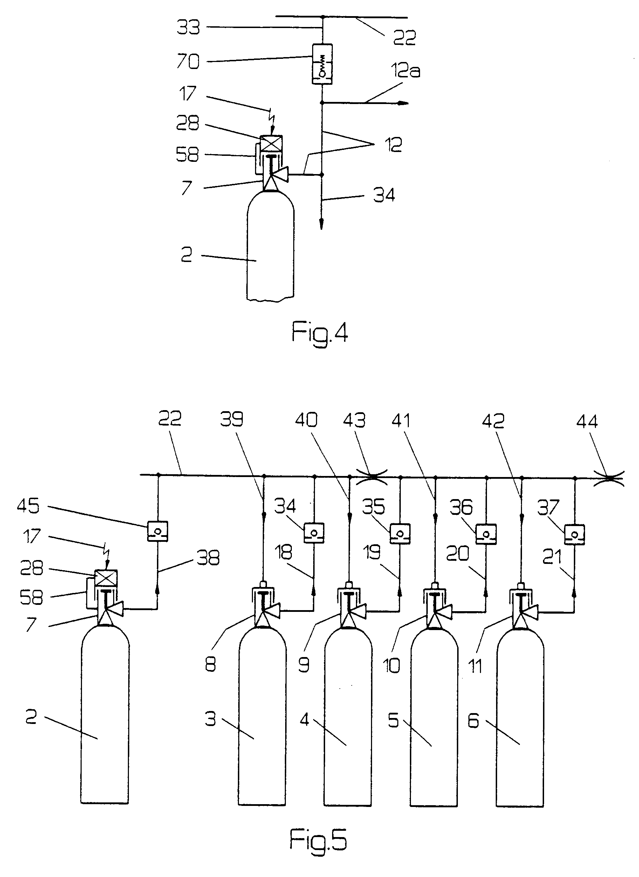

Im Ausführungsbeispiel in Fig. 3 ist das Drosselorgan 32a mit Rückschlagsicherung in der letzten Steuerleitung 12e vorgesehen und über eine Leitung 33a mit der Sammelleitung 22 verbunden. Mit 34 (Fig. 2und 4) ist eine Zweigleitung angedeutet, die von der Steuerleitung 12 für weitere Ansteuerungen z.B. von Bereichsventilen eingesetzt wird.

Anstelle des Drosselorganes 32, 32a mit Rückschlagsicherung, kann ein Doppel-Rückschlagventil 70 in die Steuerleitung 12 eingebaut sein. Dieses Doppel-Rückschlagventil 70 sorgt dafür, daß das Gas aus der Pilotflasche 2 so lange zur Beaufschlagung der Steuerleitung 12 zur Verfügung steht, bis sich in der Sammelleitung 22 ein entsprechender Druckaufbau eingestellt hat. Erst danach gibt das Doppel-Rückschlagventil 70 das Gas aus der Pilotflasche 2 zum Löschen frei. Das Doppel-Rückschlagventil 70 besteht aus einem Ventilkörper 59 mit einem unteren Anschlußstutzen 60 für das Steuergas aus der Leitung 12 und mit einem oberen Abfuhrstzen 61 für die Leitung 33 zur Sammelleitung 22. Dem Anschlußstutzen 60 ist ein Verschlußkörper 62 zugeordnet, der mittels einer Feder 63 die Ventilöffnung 69 verschließt. Der Verschlußkörper 62 sitzt in einer Verteilerkammer 68 von der mehrere Bypasskanäle 66 nach oben abgehen. Diese münden in radial verlaufende Überströmkanäle 67, die wiederum von einem Dichtkörper 64 mit Feder 65 verschlossen gehalten werden. Nach Öffnen des Steuerventiles 7 strömt das Steuergas über die Leitung 12 in den Stutzen 60 und hebt damit den Verschlußkörper 62 an. Das Gas strömt über die Verteilerkammer 68 in die Bypasskanäle 66 und in die Überströmkanäle 67. Der Dichtkörper 64 hält durch Federkraft und Gasdruck von unten über die Bohrung 71 den Abfuhrstutzen 61 geschlossen und verhindert ein weiteres Strömen des Steuergases. Folglich strömt das Steuergas in die Leitung 12a und die weiteren Leitungen 12 b bis 12 d und öffnet damit die Flaschenventile 8 bis 11. Nunmehr strömt das Gas aus den Flaschen 3 bis 6 in die Sammelleitung 22 und weiter über die Leitung 33 bzw. 33a in den Stutzen 61 des Doppel-Rückschlagventiles 70. Obwohl der Druck des jetzt ankommenden Gases verringert ist, drückt es den Dichtkörper 64 nach unten, weil sein oberer Durchmesser D größer ist, als sein unterer Durchmesser d un die Federkraft 65. Damit öffnen sich die Überströmkanäle 67, so daß das Gas aus der Pilotflasche 2 in die Sammelleitung 22 einströmen kann.

Fig. 5 zeigt eine Flaschenbatterie ohne Steuerleitungen. Hier ist das Steuerventil 7 mittels einer Leitung 38 direkt mit der Sammelleitung 22 verbunden. Von dieser gehen dann Zweigleitungen 39 bis 42 zu den Stutzen 26 der Flaschenventile 8 bis 11 ab. Damit sich ein nötiger Steuerdruck in der Sammelleitung 22 aufbaut, sind mehrere Drosseln 43 und 44 vorgesehen.

Zur Verhinderung von Rückstauungen sind in den Abführleitungen 18 bis 21 und in der Leitung 38 jeweils eine Rückschlagsicherung 34 bis 37 und 45 vorgesehen.

Die Erfindung ist nicht an die Ausführungsbeispiele gebunden. So können beispielsweise mehr oder weniger Hochdruckgasflaschen (2-6) als dargestellt zu einer Löschbatterie zusammengefaßt werden. Auch können (bei entsprechenden Löschgasen) die Verzögerungseinrichtungen 29 mit der Warneinrichtung 31 zu den Ausführungsbeispielen der Fig. 2 bis 5 gehören.

## Patentansprüche

1. Vorrichtung zum Betreiben einer Feuerlöscheinrichtung mit einem gasförmigen Löschmittel, das in mehreren Gasflaschen (3-6) gelagert ist, wobei den Gasflaschen (3-6) eine mit einem Gas gefüllte Steuerflasche (2) mit einem Steuerventil (7) vorgeschaltet ist, an dem eine Steuerleitung (12;22,38) angeschlossen ist, die über Zweigleitungen (13-16;39-42) mit den Flaschenventilen (8-11) der nachfolgenden Gasflaschen (3-6) verbunden ist, wobei von den Flaschenventilen (8-11) jeweils eine in eine Sammelleitung (22) mündende Abführleitung (18-21;39-42) abgeht, und wobei das Steuerventil (7) und die Flaschenventile (8-11) jeweils mit einer Auslöseeinrichtung versehen sind,
**dadurch gekennzeichnet,**
daß die Flaschenventile (8-11) jeweils aus einem direkt gesteuerten Kolbenventil bestehen, das mit einer aufschraubbaren Kappe (27) mit Steuer-Anschlußstutzen (26) versehen ist, und daß das Steuerventil (7) aus einem direkt gesteuerten Kolbenventil mit einer aufgeschraubten Kappe mit Auslösevorrichtung (28) besteht.

2. Vorrichtung nach Anspruch 1, dadurch gekennzeichnet, daß zwischen dem Steuerventil (7) und dem ersten Flaschenventil (8) eine pneumatische Verzögerungseinrichtung (29) vorgesehen ist.

3. Vorrichtung nach Anspruch 1 oder 2, dadurch gekennzeichnet, daß die Steuerflasche (2) als Pilotflasche mit Löschgas gefüllt ist, und daß zwischen der ersten Abzweigung der ersten Zweigleitung (13) und der Sammelleitung (22) innerhalb der Steuerleitung (12) und/oder hinter dem letzten Flaschenventil (11) ein Drosselorgan (32) mit Rückschlagsicherung eingebaut ist.

4. Vorrichtung nach Anspruch 3, dadurch gekennzeichnet, daß das Drosselorgan als Doppel-Rückschlagventil (70) ausgebildet ist.

5. Vorrichtung nach einem der Ansprüche 1-4, dadurch gekennzeichnet, daß die Anschlüsse für die Zweigleitungen (13-16) als T-Stücke ausgebildet sind, wobei die Steuerleitungen (12) zwischen den einzelnen Anschlußstücken aus Schläuchen bestehen, die auf den Enden der T-Stücke aufgesteckt sind.

6. Vorrichtung nach einem der Ansprüche 1-5, dadurch gekennzeichnet, daß die Zweigleitungen (39-42) gleichzeitig die Abführleitungen sind, daß die Steuerflasche (2) als Pilotflasche mit Löschgas gefüllt ist, daß die vom Steuerventil (7) abgehende Abführleitung (38) mit einer Rückschlagsicherung (45) zu der Sammelleitung (22) geführt ist, von der die Zweigleitungen (39-42) zu den Flaschenventilen (8-11) führen, und daß die Samelleitung (22) mit mindestens zwei Drosseln (43,44) versehen sind.

7. Vorrichtung nach einem der Ansprüche 1-6, dadurch gekennzeichnet, daß die Abführleitungen (18-21) mit Rückschlagsicherungen (34-37) versehen sind.

8. Vorrichtung nach einem der Ansprüche 1-7, mit einem Kolbenventil, bestehend aus einem Ventilkörper (46) mit Innenbohrung (47) und einem Gewindestutzen (55) zum Aufschrauben auf die Steuer- und Gasflaschen (2;3-6) sowie einem Anschlußstutzen (26) für das Steuergas und einem Abfuhrstutzen (53) für das Steuer- bzw. Löschgas, sowie einen in der Bohrung (47) des Ventilkörpers (46) bewegbaren Steuerkolben (48), der am unteren Ende eine Ventilplatte (51) mit Dichtung (51a) trägt, wobei der Ventilkörper (46) mittels einer Kappe (27) mit Anschlußstutzen (26) verschließbar ist, dadurch gekennzeichnet, daß die Kolbenstange (50) am unteren Ende die Ventilplatte (51) mit Dichtung (51a) trägt, die von dem in der Flasche enthaltenen Steuer- bzw. Löschgas gegen einen Ventilsitz (52) des Ventilkörpers (46) preßbar ist, und daß die Kolbenstange (50) im Bereich des Abfuhrstutzens (53) einen verringerten Querschnitt (54) aufweist.

9. Vorrichtung nach Anspruch 8, dadurch gekennzeichnet, daß in den Ventilkörper (46) unterhalb der Ventilplatte (51) seitlich ein Anschlußstutzen (57) für ein Druckmeßgerät und/oder eine Bypassleitung (58) und etwa auf gleicher Ebene versetzt dazu ein Anschlußstutzen (57a) für eine Berstscheibe (57b) o.dgl. vorgesehen sind.

10. Vorrichtung nach Anspruch 4, dadurch gekennzeichnet, daß das Doppel-Rückschlagventil (70) einen Ventilkörper (59) mit Anschluß- (60) und Abfuhrstutzen (61), einen unteren Ventilschlußkörper (62) mit Feder (63) und einen oberen Dichtkörper (64) mit Feder (65) aufweist, und daß Bypasskanäle (66) mit unterer Verteilerkammer (68) und oberen Überströmkanälen (67) vorgesehen sind, die bei geschlossener Gasflasche mittels der Federn (63,65) vom Verschlußkörper (62) bzw. Dichtkörper (64) nach außen abgedichtet sind.

11. Vorrichtung nach Anspruch 10, dadurch gekennzeichnet, daß der Dichtkörper (64) mit dem oberen Durchmesser D und einem unteren Durchmesser d ausgebildet ist, wobei D > d ist.

## Claims

1. Device for operating a fire-extinguishing means using a gaseous fire-extinguishing substance stored in a plurality of gas bottles (3 - 6), wherein a gas-containing control bottle (2) provided with a control valve (7) is provided upstream of the gas bottles (3 - 6), the control valve (7) being provided with a control line (12; 22; 38) connected via branch lines (13 - 16; 39 - 42) with the bottle valves (8 - 11) of the succeeding gas bottles (3 - 6), wherein a respective discharge line (18 - 21; 39 - 42) runs from each bottle valve (8 - 11) to a manifold (22), and wherein the control valve (7) and the bottle valves (8 - 11) each are provided with a release device,
**characterized in that**
the bottle valves (8 - 11) each comprise a directly controlled piston valve provided with a screw-on cap (27) having a control terminal stud (26), and that the control valve (7) comprises a directly controlled piston valve with a screwed-on cap with release device (28).

2. Device according to claim 1, characterized in that a pneumatic delay means (29) is provided between the control valve (7) and the first bottle valve (8).

3. Device according to claim 1 or 2, characterized in that the control bottle (2) as a pilot bottle is filled with fire-extinguishing gas, and that between the first junction of the first branch line (13) and the manifold (22) inside the control line (12) and/or behind the last bottle valve (11) a throttle element (32) with non-return safety mechanism is installed.

4. Device according to claim 3, characterized in that the throttle element is configured as double non-return valve (70).

5. Device according to one of claims 1 - 4, characterized in that the connections for the branch lines (13 - 16) are configured as T-sections with the control line (12) between the individual connectors being made up of hoses attached to the ends of the T-sections.

6. Device according to one of claims 1 - 5, characterized in that the branch lines (39 - 42) simultaneously act as discharge lines, that the control bottle (2) as a pilot bottle is filled with fire-extinguishing gas, that the discharge line (38) provided with a non-return safety mechanism (45) leads from the control valve (7) to the manifold (22) from where the branch lines (39 - 42) lead to the bottle valves (8 - 11), and that the manifold (22) comprises at least two throttles (43, 44).

7. Device according to one of claims 1 - 6, characterized in that the discharge lines (18 - 21) comprise non-return safety mechanisms (34 - 37).

8. Device according to one of claims 1 - 7, provided with a piston valve comprising a valve body (46) with inner bore (47) and a threaded connecting piece (55) to be screwed onto the control and gas bottles (2; 3 - 6) as well as a terminal stud (26) for the control gas and a discharge connecting piece (53) for the control or the fire-extinguishing gas as well as control piston (48) movable in the bore (47) of the valve body (46) with the control piston carrying at its lower end a valve plate (51) with seal (51a), wherein the valve body (46) is closable by a cap (27) having a terminal stud (26), characterized in that the piston rod (50) carries the valve plate (51) with seal (51a) at its lower end, which can be pressed by the control or fire-extinguishing gas in the bottle against a valve seat (52) of the valve body (46), and that the piston rod (50) comprises a reduced cross-section (54) in the area of the discharge connecting piece (53).

9. Device according to claim 8, characterized in that in the valve body (46) below the valve plate (51) a connecting piece (57) for a pressure meter and/or a bypass line (58) is laterally provided and, approximately on the same plane, a connecting piece (57a) for a rapture disk (57b) or similar is provided in staggered arrangement relative to the former.

10. Device according to claim 4, characterized in that the double non-return valve (70) comprises a valve body (59) with connecting piece (60) and discharge connecting piece (61), a lower valve closing element (62) with spring (63) and an upper sealing element (64) with spring (65), and that bypass ducts (66) with lower distribution chamber (68) and upper overflow ducts (67) are provided which are sealed to the outside via the springs (63, 65) by means of the closing element (62) and the sealing element (64) respectively when the gas bottle is closed.

11. Device according to claim 10, characterized in that the sealing element (64) is configured with the upper diameter D and a lower diameter d, where D > d.

## Revendications

1. Dispositif de fonctionnement d'un système d'extinction d'incendie avec un agent d'extinction gazeux, qui est stocké dans plusieurs bouteilles de gaz (3-6), les bouteilles de gaz (3-6) étant précédées dans le circuit par une bouteille de commande (2) remplie avec un gaz, comportant une valve de commande (7), à laquelle est reliée une ligne de commande (12 ; 22, 38), qui est connectée, par l'intermédiaire de lignes de dérivation (13-16 ; 39-42), aux valves de bouteille (8-11) des bouteilles de gaz suivantes (3-6), avec, partant de chaque valve de bouteille (8-11), une ligne d'évacuation (18-21 ; 39-42) débouchant dans un collecteur (22), la valve de commande (7) et les valves de bouteille (8-11) étant équipées d'un dispositif de déclenchement respectif,
caractérisé en ce que,
les valves de bouteille (8-11) sont constituées d'une valve à piston à commande directe respective, équipée d'un capuchon vissable (27) comportant des raccords de connexion de commande (26), et en ce que la valve de commande (7) est constituée d'une valve à piston à commande directe, comportant un capuchon vissé avec un dispositif de déclenchement (28).

2. Dispositif selon la revendication 1, caractérisé en ce que, entre la valve de commande (7) et la première valve de bouteille (8), est prévu un dispositif de temporisation pneumatique (29).

3. Dispositif selon la revendication 1 ou 2, caractérisé en ce que la bouteille de commande (2), en tant que bouteille pilote, est remplie avec un gaz extincteur, et en ce qu'entre la première dérivation de la première ligne de dérivation (13) et le collecteur (22), à l'intérieur de la ligne de commande (12) et/ou derrière la dernière valve de bouteille (11), est intégré un organe d'étranglement (32), comportant un dispositif antiretour.

4. Dispositif selon la revendication 3, caractérisé en ce que, l'organe d'étranglement est formé comme double clapet antiretour (70).

5. Dispositif selon l'une des revendications 1 à 4, caractérisé en ce que les connexions des lignes de dérivation (13-16) sont formées comme des pièces en T, les lignes de commande (12) entre les différentes pièces de connexion étant constituées de tuyaux souples, qui sont enfilés sur les extrémités des pièces en T.

6. Dispositif selon l'une des revendications 1 à 5, caractérisé en ce que les lignes de dérivation (39-42) sont en même temps les lignes d'évacuation, en ce que la bouteille de commande (2), en tant que bouteille pilote, est remplie avec du gaz extincteur, en ce que la ligne d'évacuation (38) partant de la valve de commande (7) et comportant un dispositif antiretour (45) est amenée au collecteur (22), à partir duquel les lignes de dérivation (39-42) vont vers les valves de bouteille (8-11), et en ce que le collecteur (22) est pourvu de deux organes d'étranglement (43, 44) au moins.

7. Dispositif selon l'une des revendications 1 à 6, caractérisé en ce que les lignes de dérivation (18-21) sont équipées de dispositifs antiretour (34-37).

8. Dispositif selon l'une des revendications 1 à 7, comportant une valve à piston, constituée d'un corps de valve (46) avec un alésage interne (47) et un raccord fileté (55) destiné à être vissé sur les bouteilles de commande et de gaz (2 ; 3-6), ainsi que d'un raccord de connexion (26) pour le gaz de commande et d'un raccord d'évacuation (53) pour les gaz de commande et d'extinction, ainsi qu'un piston de commande (48), mobile dans l'alésage (47) du corps de valve (46), portant à l'extrémité inférieure une plaque de valve (51), comportant un joint d'étanchéité (51a), le corps de valve étant obturable à l'aide d'un capuchon (27) avec des raccords de connexion (26), caractérisé en ce que la tige du piston (50) porte à l'extrémité inférieure la plaque de valve (51) comportant un joint d'étanchéité (51a), qui peut être pressé par le gaz de commande ou d'extinction contenu dans la bouteille contre un siège de valve (52) du corps de valve (46), et en ce que la tige du piston (50), dans la zone du raccord d'évacuation (53), présente une section réduite (54).

9. Dispositif selon la revendication 8, caractérisé en ce que, dans le corps de valve (46), sous la plaque de valve (51), sur le côté, est prévu un raccord de connexion (57) pour un manomètre et/ou une ligne de dérivation (58) et, un peu décalé sur le même plan par rapport à ceux-ci, est prévu un raccord de connexion (57a) pour un disque de rupture (57b) ou analogue.

10. Dispositif selon la revendication 4, caractérisé en ce que le double clapet antiretour (70) présente un corps de valve (59) comportant des raccords de connexion (60) et d'évacuation (61), un corps de verrouillage de valve inférieur (62) avec un ressort (63) et un corps d' étanchéité supérieur (64), comportant un ressort (65), et en ce que des canaux de dérivation (66) comportant une chambre de répartition (68) et des canaux de trop plein supérieurs (67) sont prévus, qui lorsque les bouteilles de gaz sont fermées, sont rendus étanches vis-à-vis de l'extérieur au moyen des ressorts (63, 65), par le corps de verrouillage (62) ou le corps d'étanchéité (64).

11. Dispositif selon la revendication 10, caractérisé en ce que le corps d'étanchéité (64) est formé avec un diamètre supérieur D et un diamètre inférieur d, tels que D > d.
